# EUROPEAN PATENT APPLICATION

(11) **EP 2 985 701 A1**
(43) Date of publication of application: **17.02.2016**
(21) Application number: 13881497.5
(22) Date of filing: 24.10.2013
(51) Int. Cl.: G06F 17/30

(54) **METHOD, APPARATUS, AND DEVICE FOR ADDING PLUG-IN IN ADDRESS BOOK**

(30) Priority: 11.04.2013 CN 201310125562
(71) Applicant: Xiaomi Inc., Beijing 100085 (CN)
(72) Inventor: LIU, Yuxiang, Beijing 100085 (CN); NIU, Kun, Beijing 100085 (CN); QIAO, Zhongliang, Beijing 100085 (CN)
(74) Representative: Sackin, Robert
(86) International application number: PCT/CN2013/085883
(87) International publication number: WO 2014/166227

(57) **Abstract**

Disclosed are a method, an apparatus, and a device for adding a plug-in in an address book. The address book has an open interface, and the plug-in is a third-party application plug-in generated according to the standards defined by the interface. The method comprises: receiving a request for installing the plug-in, and authenticating the plug-in according to the request; after the authentication succeeds, adding the plug-in in an address book; receiving a request for invoking a plug-in function, and invoking the function corresponding to the plug-in according to the user request. According to the embodiments of the present invention, the functions of the address book are diversified, and the complicated operation steps are simplified, so that it is more easy and convenient to perform the operation; moreover, desirable stability and response speed are maintained during running of a mobile device.

## Description

The present application is submitted based on and claims priority to Chinese patent application No. 201310125562.4, filed on April 11, 2013, which is incorporated herein by reference in its entirety.

### TECHNICAL FIELD

Embodiments of the present disclosure relates to the technical field of mobile device, and more particularly to a method for adding a plugin into a contact list, and an apparatus and a device for adding a plugin into the contact list.

### BACKGROUND

In daily life, the contact list is an application used most frequently in mobile device (e.g. mobile phone, tablet computer, etc.). In general, the contact lists may be used to store contact information such as names, phone numbers, home addresses, email addresses, and birthdays of contacts. For convenience of users, contact lists in mobile devices may usually be provided with some common functions. For example, a user is enabled to select a contact in a contact list to call the contact's phone number or send message thereto directly.

It should be understood that, in actual, the contact list fully represents a social network of a user (e.g. a mobile phone owner). With a increasingly development of communication technology via network, more and more kinds of individual requirements are demanded by users with regard to applications scenarios based on social network, and some of these requirements may be only applied in small scales.

However, existing contact lists are only provided with some basic common functions, which are impossible to meet those small-scale requirements. Moreover, existing contact lists are based on closed platforms, thus, if it is desired to add all of the users' individual requirements to the contact list, people have to redesign new kinds of contact lists with huge works and low paybacks. The running stabilities and response speeds of mobile devices may be decreased due to excess of program data. Also, redundant functions of contact list may become an obsession for those ordinary users, thus the user experiences may be degraded dramatically.

As another existing solution, new applications (APP) may be developed separately to meet those individual needs of users. Apparently, in order to develop the applications, a lot of human resources and material resources have to be consumed to design UIs, and to construct and promote architectures of the APPs with high difficulties and investment costs. Furthermore, even if the newly developed applications are acceptable, users may have to download too many application which occupy excessive resources of mobile devices. The user experiences may also be degraded dramatically.

### SUMMARY

In order to solve the problems as above, the embodiments of the present disclosure provide a method for adding a plugin into a contact list, in which a user is enabled to invoke related functions of a third-party application directly form the contact list platform by opening an interface of the contact list in a mobile device and importing a third-party application plugin through the interface, thereby the system resources and storage spaces to be occupied are reduced.

The embodiments of the present disclosure further provide an apparatus and a device for adding a plugin into the contact list, so as to ensure the method described as above to be implemented and applied.

In one aspect, the embodiments of the present disclosure disclose a method for adding a plugin into a contact list, wherein the contact list has an open interface, and the plugin is a third-party application plugin generated based on a specification defined by the interface; the method comprises:
receiving a request for installing the plugin, and performing an authentication for the plugin according to the request;
adding the plugin into the contact list after the authentication successes; and
receiving a user request for invoking a function of the plugin, and invoking a corresponding function of the plugin according to the user request.

Preferably, the specification defined by the interface comprises a User Interface UI specification and a predefined authority specification.

Preferably, the receiving the request for installing the plugin and performing the authentication for the plugin according to the request comprises:
receiving the request for installing the plugin, and judging according to the request whether the plugin conforms to the User Interface UI specification and the predefined authority specification; wherein
if the plugin conforms to the User Interface UI specification and the predefined authority specification, then determining that the authentication successes, and
if the plugin does not conform to the User Interface UI specification or the predefined authority specification, then generating a prompt message for prompting the user to determine whether to continue the installation.

Preferably, the adding the plugin into the contact list comprises:
presenting the plugin at a corresponding position of the contact list in a designated mode according to the specification defined by the interface; and
installing a functional data packet carried in the plugin.

Preferably, prior to the receiving the user request for invoking the function of the plugin, the method further comprises:
judging whether the contact list is provided therein with a function to enable the plugin; wherein
if the contact list is provided therein with a function to enable the plugin, then performing the receiving the user request for invoking the function of the plugin; and
if the contact list is not provided therein with a function to enable the plugin, then generating a prompt message for prompting the user to determine whether to enable the plugin.

Preferably, the the receiving the user request for invoking the function of the plugin and invoking the corresponding function of the plugin according to the user request comprises:
receiving the user request for invoking the function of the plugin, opening the functional data packet carried in the plugin, and opening a corresponding entry accessing an associated third-party application through the functional data packet; and
transmitting data from the contact list to the third-party application via the entry, and performing the corresponding function in the third-party application.

Preferably, the contact list comprises therein contact information of account numbers bound by the user.

As another aspect, the embodiments of the present disclosure disclose an apparatus for adding a plugin into the contact list, characterized in that wherin the contact list has an open interface, and the plugin is a third-party application plugin generated based on a specification defined by the interface; the apparatus comprises:
a request receiving module configured to receive a request for installing the plugin;
an authenticating module configured to perform an authentication for the plugin according to the request;
an adding module configured to add the plugin into the contact list after the authentication successes; and
an invoking module configured to receive a user request for invoking a function of the plugin, and invoking a corresponding function of the plugin according to the user request.

Preferably, the specification defined by the interface comprises a User Interface UI specification and a predefined authority specification.

Preferably, the authenticating module comprises:
an authority specification judging submodule configured to judge according to the request whether the plugin conforms to the User Interface UI specification and the predefined authority specification, and
if the plugin conforms to the User Interface UI specification and the predefined authority specification, call a successful authenticating submodule, if the plugin does not conform to the User Interface UI specification or the predefined authority specification, call a first prompting submodule; wherein
the successful authenticating submodule is configured to determine that the authentication successes; and
the first prompting submodule is configured to generate a prompt message for prompting the user to determine whether to continue the installation.

Preferably, the adding module comprises:
a presenting submodule configured to present the plugin at a corresponding position of the contact list in a designated mode according to the specification defined by the interface; and
an installing submodule configured to install a functional data packet carried in the plugin.

Preferably, the apparatus further comprises:
an enablement judging module configured to judge whether the contact list is provided therein with a function to enable the plugin, and if the contact list is provided therein with the function to enable the plugin, call an execution submodule; if the contact list is not provided therein with the function to enable the plugin, call a second prompting submodule; wherein
the execution submodule is configured to perform the receiving the user request for invoking the function of the plugin; and
the second prompting submodule is configured to generate a prompt message for prompting the user to determine whether to enable the plugin.

Preferably, the invoking module comprises:
an entry opening submodule configured to receive a user request for invoking the function of the plugin, open the functional data packet carried in the plugin, and open a corresponding entry accessing an associated third-party application through the functional data packet; and
a data transmitting submodule configured to transmit data from the contact list to the third-party application via the entry, and perform the corresponding function in the third-party application.

As yet another aspect, the embodiments of the present disclosure further disclose a device comprising:
one or more processors;
a memory; and
one or more modules stored in the memory and configured to be executed by the one or more processors, wherein the one or more modules are provided with following functions:
receiving a request for installing a plugin, and performing an authentication for the plugin according to the request;
adding the plugin into the contact list after the authentication successes; and
receiving a user request for invoking a function of the plugin, and invoking a corresponding function of the plugin according to the user request.

The embodiments of the present disclosure have some following advantages.

In the embodiments of the present disclosure, the user is enabled to invoke related functions of a third-party application directly form the contact list platform by opening an interface of the contact list in mobile device and importing a third-party application plugin through the interface, thus avoiding troublesome operation steps, operating more conveniently and smoothly, and thereby improving the operability of the contact list of mobile device. Since the system resources occupied by running a plugin are far less than that occupied by running an application, the contact list may be integrated with several different plugins to meet different user requirements, such that the contact list may be diversified in functions, and the mobile device may be operated with good stability and high response speed.

There are existing APP structures and UI specifications for developing plugins based on the contact lists of mobile devices, the threshold for technical requirements and investment costs in developing and designing may be lowered. Moreover, operation and distribution channels may be further provided for devices based on the contact lists, which facilitates developers to a large extent and contributes to the developments of the plugins of third-party application and the perfections of the functions of contact lists.

In addition, contact list systems based on other platforms may be implanted into the current contact list by obtaining management functions for account numbers of those platforms, which facilitates the user managements.

It should be understood that, both the general description hereinabove and the detailed description hereinafter are only exemplary, and not to limit the present disclosure.

### DETAILED DESCRIPTION

Fig. 1 illustrates an exemplary flow chart of a method for adding a plugin into a contact list according to a first embodiment of the present disclosure;
Figs. 2a-2g illustrate schematic diagrams of exemplary specific applications for display positions of opening plugins in the contact list platform according an embodiment of the present disclosure;
Fig. 3 illustrates a schematic diagram of an exemplary application scenario when invoking a related function of the plugin according to an embodiment of the present disclosure;
Fig. 4 illustrates a schematic diagram of an exemplary application scenario when invoking a related function of the plugin according to an embodiment of the present disclosure;
Fig. 5 illustrates a schematic diagram of an exemplary application scenario when invoking a related function of a plugin according to an embodiment of the present disclosure;
Fig. 6 illustrates a schematic diagram for an exemplary application scenario when invoking a related function of a plugin according to an embodiment of the present disclosure;
Fig. 7 illustrates a schematic diagram for an exemplary application scenario when invoking a related function of a plugin according to an embodiment of the present disclosure;
Fig. 8 illustrates a schematic diagram for an exemplary application scenario when invoking a related function of a plugin according to an embodiment of the present disclosure;
Fig. 9 illustrates a schematic diagram for an exemplary application scenario when invoking a related function of a plugin according to an embodiment of the present disclosure;
Fig. 10 illustrates a schematic diagram for an exemplary application scenario when invoking a related function of a plugin according to an embodiment of the present disclosure;
Fig. 11 illustrates a schematic diagram for an exemplary application scenario when invoking a related function of a plugin according to an embodiment of the present disclosure;
Fig. 12 illustrates a schematic diagram for an exemplary application scenario when invoking a related function of a plugin according to an embodiment of the present disclosure;
Fig. 13 illustrates a schematic diagram for an exemplary application scenario when invoking a related function of a plugin according to an embodiment of the present disclosure;
Fig. 14 illustrates an exemplary flow chart of a method for adding a plugin into a contact list according to a second embodiment of the present disclosure;
Fig. 15 illustrates an exemplary block diagram of an apparatus for adding a plugin into the contact list according to an embodiment of the present disclosure.

The specific embodiments of the present disclosure have been illustrated in the above drawings and the detailed description thereof will be given hereinafter. These drawings and descriptions are only for illustrating the concept of the present disclosure with reference to the specific embodiments for those skilled in the art, rather than limiting the scope conceived by the present disclosure in any manner.

### DETAILED DESCRIPTION

Embodiments of the present disclosure will be described further in detail with reference to the accompanying drawings and those embodiments, so as to make above features, technical solutions and advantages thereof more obvious and easy to understand.

One of core concepts according to the embodiments of the present disclosure lies in that, by opening an interface of contact list in mobile device and then importing a third-party application plugin via the interface, a user is enabled to invoke related functions of the third-party application directly on a contact list platform via the plugin.

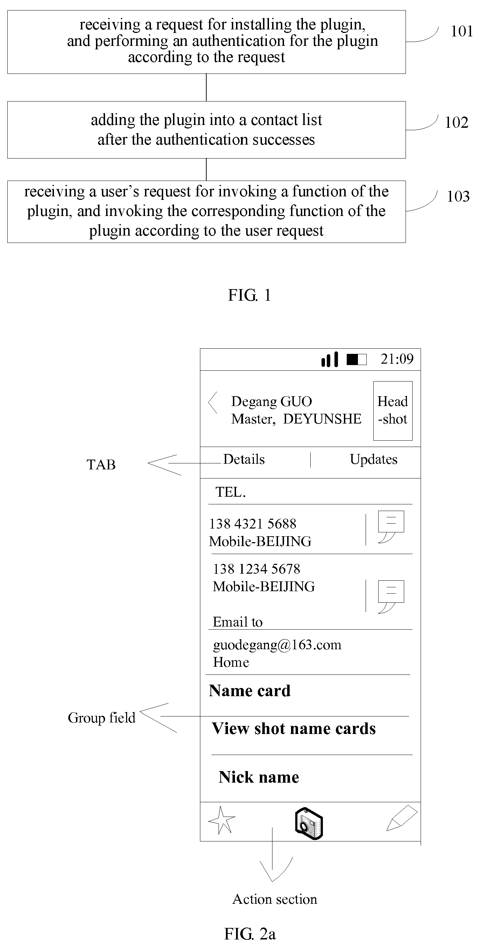

Referring to Fig. 1, it illustrates a flow chart of steps of a method for adding a plugin into a contact list according to an embodiment of the present disclosure. In the embodiment of the present disclosure, the contact list has an open interface, and the plugin refer to a third-party application plugin which is generated based on a specification defined by the interface. The present embodiment may, in particular, comprise following steps:

step 101, receiving a request for installing the plugin, and performing an authentication for the plugin according to the request;

step 102, adding the plugin into the contact list after the authentication successes; and

step 103, receiving a user request for invoking a function of the plugin, and invoking a corresponding function of the plugin according to the user request.

It should be noted that, the "contact list" or the "contact list platform" (with respect to functions of the open interface to be loaded thereon) mentioned in the embodiments of the present disclosure refers to a contact list application installed or configured in a mobile device, such as a function of the contact list in a mobile phone. In the embodiments of the present disclosure, the mobile device may be various mobile devices such as a tablet computer, a personal digital assistant or a mobile phone, but the present embodiment is not limited thereto.

In specific implementations, contacts in the contact list may comprise contact information stored in the mobile device, such as names, phone numbers, home addresses, email addresses, and birthdays of the contacts in the contact list of the mobile phone input by a user. The contacts in the contact list may also comprise contact information stored in cloud storages, such as contact information submitted by the user stored in a cloud server. In one of embodiments according to the present disclosure, the contact list may also comprise contact information of account numbers bound by the user. For example, when a Social Network Service (SNS) / Instant Messaging (IM) account number is tied in the user contact list, the contacts in the contact list may further comprise all the contacts of the SNS/IM account numbers. The account numbers bound by the user may also comprise account numbers involving the user social network behaviors such as an account number of a game platform, an account number of online voice /video call service, an account number of a network disk, and an account number of terminal interconnection service. When in need of using contacts of the user related account number while their account numbers are not bound, a temporary account number authorization may be adopted, that is, those other account numbers and passwords thereof may be verified via the contact list, so as to obtain related account contact information.

In specific implementations, the open interface of the contact list may include an API interface (application interface) based on the operating system (OS) of mobile devices, comprising but not limited to an OS UI (user interface), common controls, data (e.g. contact data), functions (e.g. merging replicated contacts), and principles corresponding to the above items such as a method for processing polyphonic characters and basic rules for ranking and grouping contacts.

In the embodiment of the present disclosure, the plugin may be interpreted as a third-party application plugin which is generated based on a specification defined by the open interface of the contact list.

As an example of the embodiment according to the present disclosure, the specification defined by the open interface may comprise a UI specification and a predefined authority specification. Wherein, the UI specification may comprise a specification for codes and controls design. The specification for codes design may be interpreted as that the codes of the plugin should be in conformity with coding requirements of the mobile device's OS and the contact list's API interface. The specification for controls design may be interpreted as which specific position to be opened and which way of representation to be used in the contact list for representing the plugin.

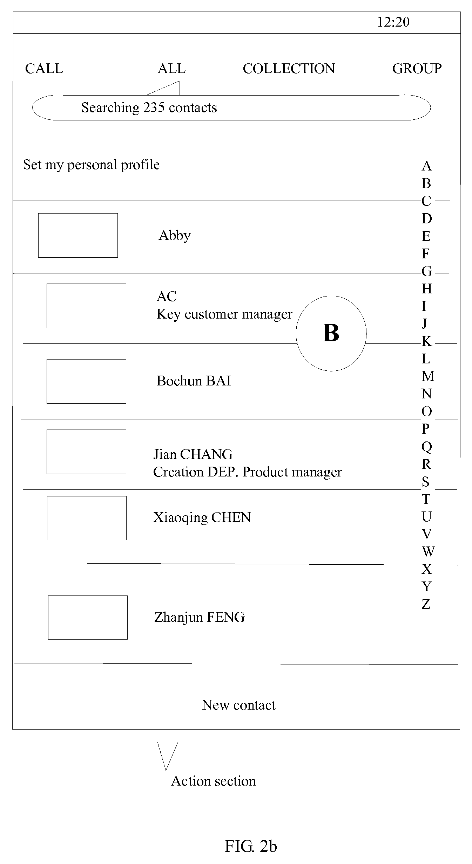

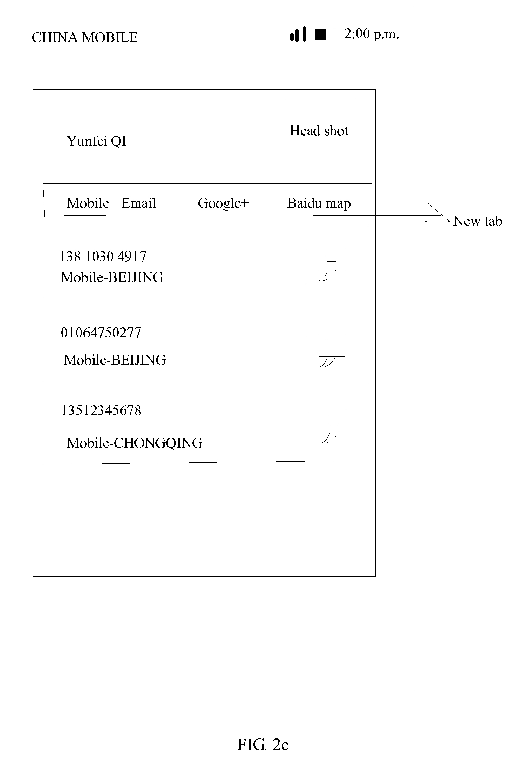

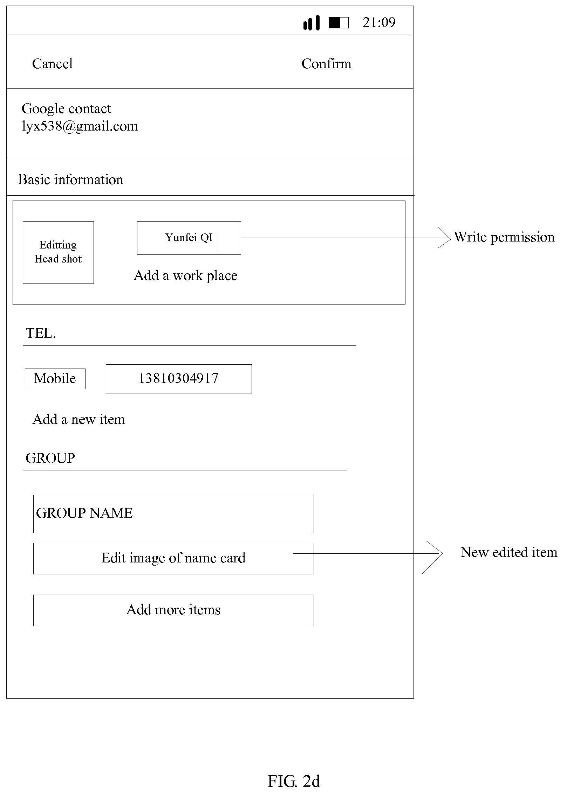

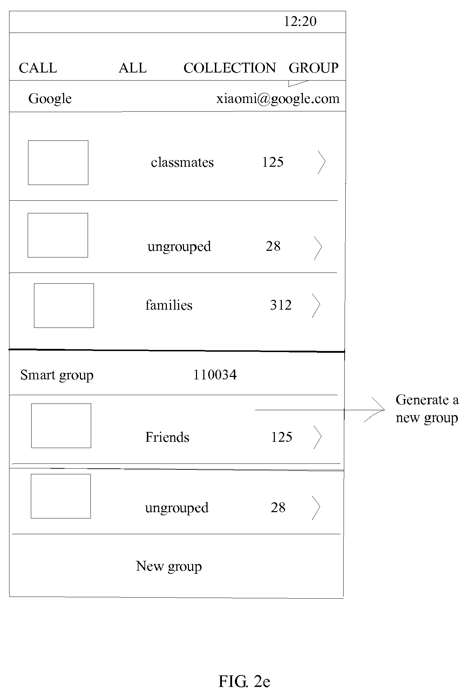

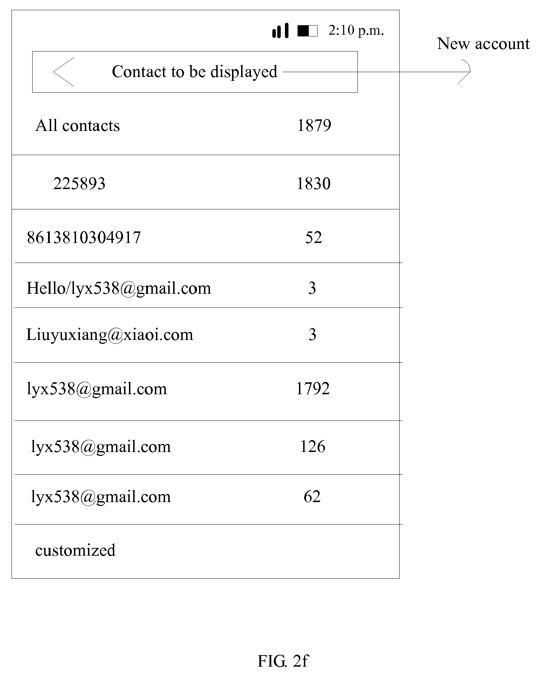

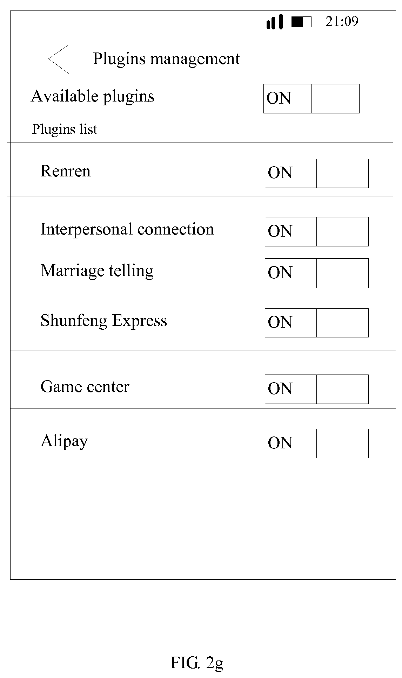

Referring to Fig. 2, it illustrates schematic diagrams of exemplary specific applications for display positions of an opened plugin in the contact list platform according to an embodiment of the present disclosure. For example, as shown in Fig. 2a, a TAB field, a group field, and an action section are opened in a contact information interface of the contact list, so as to provide display for a plugin having a corresponding function; as shown in fig. 2b, all contacts in contact list are displayed on an "ALL" interface of a main interface of the contact list, in which interface an action section is opened to provide display for a plugin having a corresponding function; as shown in fig. 2c, a contact may be clicked for viewing brief introduction thereof on the "ALL" interface of the main interface of the contact list, in which interface a tab section is open to provide display for a plugin having a corresponding function; as shown in fig. 2d, a write permission is opened for a plugin to write contact information on a contact information editing interface, and an editing item is opened on this interface, so as to provide display for the plugin having a corresponding function; as shown in fig. 2e, all groups of contacts are displayed on a "GROUP" interface of the main interface of the contact list, in which interface a grouping section is opened, so as to provide display for a plugin having a corresponding function; as shown in fig. 2f, an account number section is opened in an account management interface of the contact list, so as to provide display for a plugin having a corresponding function; as shown in fig. 2g, installation information of a plugin as well as the corresponding authority switches may be displayed on a plugins management interface of the contact list, and there may also be an integrated authority switch for all of the plugins, by which the user is able to turn on or off the plugins manually. In addition, an uninstallation management of the plugins may be defined on the plugin management interface of the contact list or may be defined at other positions.

In specific implementations, the predefined authority specification may comprise read and/or write permissions for data of the contact list, read and/or write permissions for data of an associated third-party application, and processing permissions for data of a plugin, but not limited thereto.

If a plugin attached to the contact list and a separate APP (application) both can be used to achieve a simple application, the plugin generated based on the specification may occupy less system resources and storage space compared to the separate APP.

In the embodiment of the present disclosure, when a request for installing a plugin is received by the contact list platform of a mobile device, an authentication will be performed to the plugin firstly. The so-called authentication refers to analyzing validity of the plugin for ensuring running security of the contact list so as to, for example, prevent the contact list from being damaged due to installation errors, prevent the plugin from performing wicked applications such as stealing userdata illegally and issuing service instructions illegally.

As exemplary specific applications in the embodiments of the present disclosure, authorities of a plugin may be constructed by two following manners.

In one of the two manners, a developer of the plugin may prearrange manually for an authorization with a developer of the contact list, so as to verify by means of a fixed ID or a key verification via cloud.

In another one of the two manners, verification is performed by a user manually, in which authority switches of the plugin application may be displayed in the contact list after a request for installation is sent from the plugin, and those switches may be turned on or off by the user manually.

If applying the former manner in the step 101, the authentication to verify validity of the plugin may be performed quickly without additional analysis to the validity of the plugin, thereby it is easy for providing installation and validity warrant. The latter manner is suitable for plugins management, considering that not all of plugins are applicable to different contacts when a plurality of plugins are installed in the contact list, the interface of contact information may be kept neat and the contact list may have less burden in operation by controlling the authority switch of the plugin.

In one embodiment of the present disclosure, the step 101 may comprise following substeps specifically:
substep S11, receiving a request for installing the plugin, and judging according to the request whether the plugin conforms to an User Interface (UI) specification and the predefined authority specification; if so, performing substep S 12; and if not, performing substep S 13;
substep S12, determining that the authentication successes; and
substep S13, generating a prompt message to prompt the user to determine whether to continue installation.

It should be understood that, the manner in which the developer of the contact list prearranges manually for the authorization with the developer of the plugin and then the verification is performed by means of a fixed ID or a key verification via cloud may also be applicable in the substep S11. When the authority of the plugin exceeds a specified range defined by the interface, the user has to judge validity of the plugin by oneself according to the prompt message and determines whether to continue the installation.

Obviously, the manner of judgment process mentioned above is only taken as an example. While implementing the embodiment of the present disclosure, other manners of judgment processes may be provided according to actual situations, which are not limited herein by the embodiments of the present disclosure. Moreover, in addition to the manner of judgment process mentioned above, those skilled in the art may also adopt other manners of judgment processes based on actual needs, which are not limited herein by the embodiment of the present disclosure either.

After the authentication successes, the plugin may be added into the contact list platform.

In one embodiment of the present disclosure, the step 102 may comprise following substeps specifically:
substep S21, presenting the plugin at a corresponding position of the contact list in a designated mode according to the specification defined by the interface; and
substep S22, installing a functional data packet carried in the plugin.

The functional data packet comprises substantive content of the plugin. Depending on different functional data packets, the plugin may perform data reading and/or writing between the contact list and the third-party application, or may perform its simple applications.

For example, a plugin with a function of birthday reminder may be imported into the contact list platform to reminder the user about birthdays of the contacts in the contact list. Herein, the contact list data may be interpreted as the contacts and their birthdays. The plugin generates a button for the function of birthday reminder on the interface of contact information, and determines a target contact, a reminding deadline, and a reminding pattern according to user selections, then invokes the plugin to perform the corresponding function of reminder.

In one embodiment of the present disclosure, the step 103 may comprise following substeps specifically:
substep S31, receiving a request for invoking the function of the plugin from a user, opening the functional data packet carried in the plugin, and opening a corresponding entry accessing an associated third-party application through the functional data packet; and
substep S32, transmitting data from the contact list to the third-party application via the entry, and performing the corresponding function in the third-party application.

The step 103 will be further described with reference to examples of the following application scenarios hereinafter.

The first application scenario:

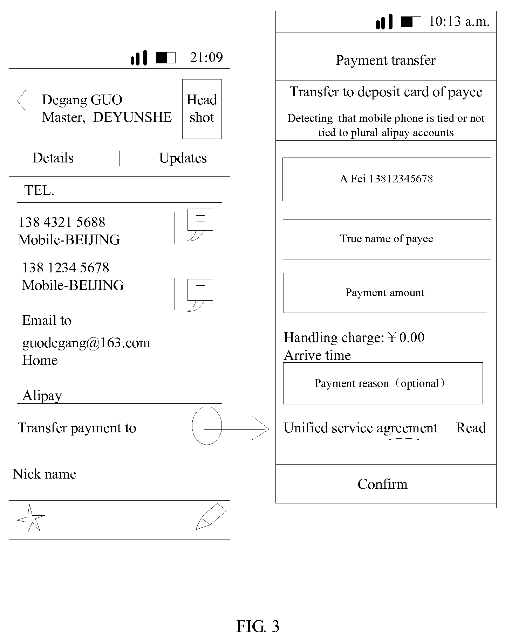

Referring to fig. 3, it illustrates a schematic diagram showing an exemplary application scenario of a plugin for transferring payment to a target contact according to an embodiment of the present disclosure.

The plugins of contact list comprise a plugin for payment transfer, and the receiving a user request for invoking a function of the plugin and invoking the corresponding function of the plugin according to the user request comprises:
receiving a request submitted by a user for transferring payment to a target contact, and opening a corresponding entry of a third-party application associated with the plugin for payment transfer according to the request of the user; and
transmitting data of the target contact and the current user to the third-party application via the entry, and performing the corresponding function of payment transfer in the third-party application.

The second application scenario:

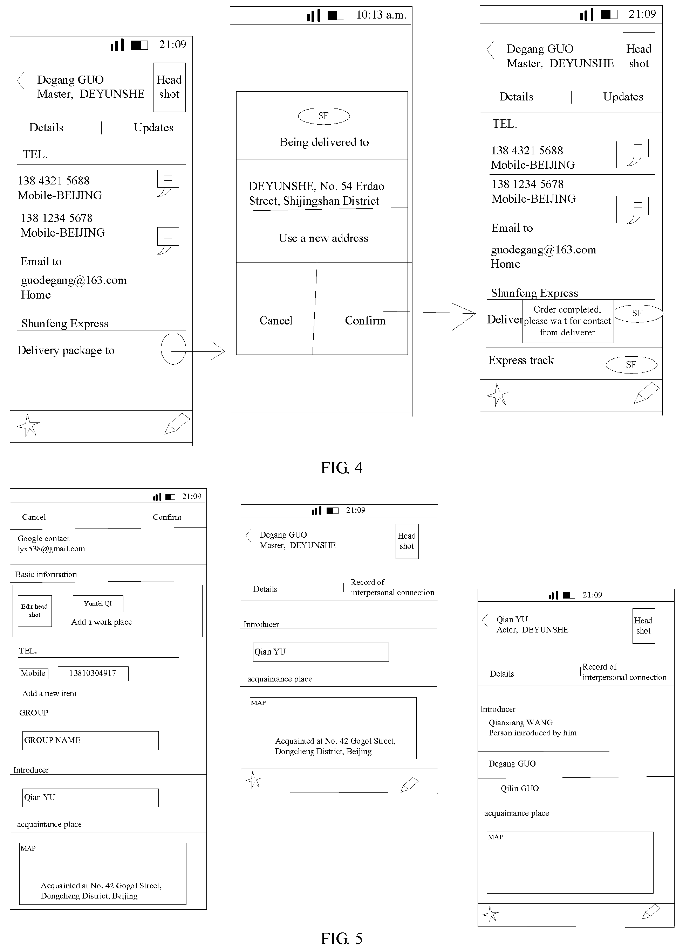

Referring to fig. 4, it illustrates a schematic diagram showing an exemplary application scenario of a plugin for delivering a package to a target contact according to an embodiment of the present disclosure.

The plugins of contact list comprise a plugin for express delivery, and the receiving a user request for invoking a function of the plugin and invoking the corresponding function of the plugin according to the user request comprises:
receiving a request submitted by a user for delivering a package to a target contact, and opening a corresponding entry of a third-party application associated with the plugin for express delivery according to the request of the user; and
transmitting data of the target contact and the current user to the third-party application via the entry, whereby the third-party application may transmit the information on the user and the target contact to an express company.

The third application scenario:

Referring to fig. 5, it illustrates a schematic diagram showing an exemplary application scenario of a plugin for adding information on interpersonal connections to a target contact according to an embodiment of the present disclosure.

The plugins of contact list comprise a plugin for interpersonal connections, and the receiving a user request for invoking a function of the plugin and invoking the corresponding function of the plugin according to the user request comprises:
receiving a request submitted by a user for adding interpersonal connections to a target contact, writing data of the interpersonal connections of the target contact according to the request of the user, and opening a corresponding entry of a third-party application associated with the plugin for interpersonal connections; and
writing data feed back from the third-party application into information of the target contact; and
the plugin for interpersonal connections writing data of the interpersonal connections into information of contacts related to the interpersonal connections.

The fourth application scenario:

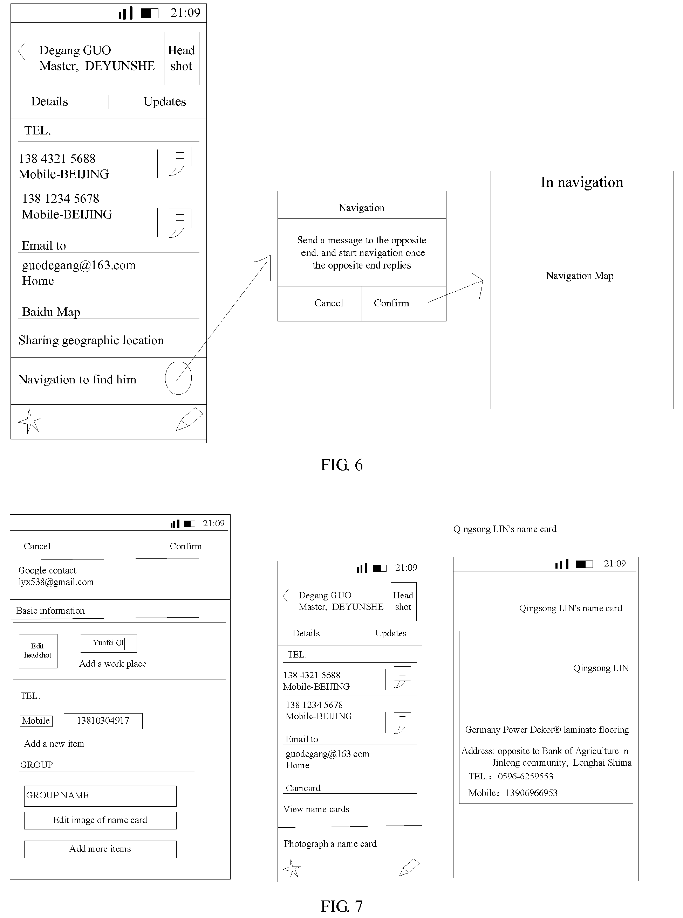

Referring to fig. 6, it illustrates a schematic diagram showing an exemplary application scenario of a plugin for inquiring geographic location of a target contact according to an embodiment of the present disclosure.

The plugins of contact list comprise a plugin for location inquiry, and the receiving a user request for invoking a function of the plugin and invoking the corresponding function of the plugin according to the user request comprises:
receiving a request submitted by a user for inquiring geographic location of a target contact, sending designated information to the target contact according to the request of the user, and opening a corresponding entry of a third-party application associated with the plugin for location inquiry; and
transmitting data of the current user and data responded from the target contact to the third-party application via the entry, and performing the corresponding function of location inquiry in the third-party application.

The fifth application scenario:

Referring to fig. 7, it illustrates a schematic diagram showing an exemplary application scenario of a plugin for inquiring a name card of a target contact according to an embodiment of the present disclosure.

The plugins of contact list comprise a plugin for name cards, and the receiving a user request for invoking a function of the plugin and invoking the corresponding function of the plugin according to the user request comprises:
receiving a request submitted by a user for inquiring a name card of a target contact, and opening a corresponding entry of a third-party application associated with the plugin for name cards according to the request of the user; and
transmitting data of the target contact to the third-party application via the entry, and performing the corresponding function of inquiring name card in the third-party application.

The sixth application scenario:

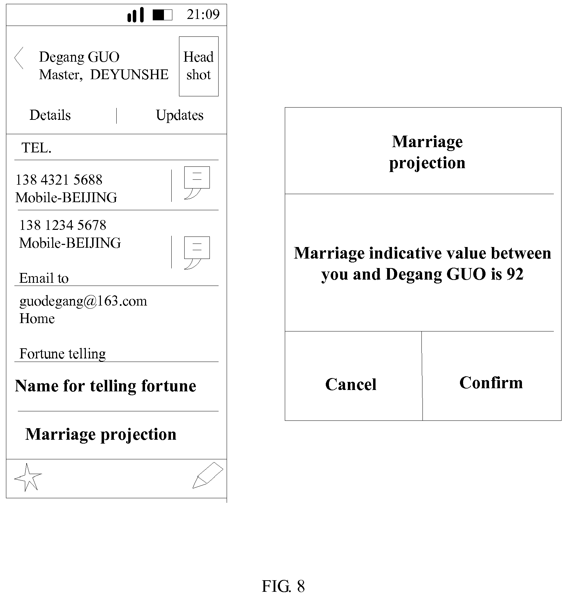

Referring to fig. 8, it illustrates a schematic diagram showing an exemplary application scenario of a plugin for entertainment according to an embodiment of the present disclosure.

The plugins of contact list comprise a plugin for fortune telling, and the receiving a user request for invoking a function of the plugin and invoking the corresponding function of the plugin according to the user request comprises:
receiving a request submitted by a user for telling fortune of a target contact, and opening a corresponding entry of a third-party application associated with the plugin for fortune telling according to the request of the user; and
transmitting data of the target contact and the current user to the third-party application via the entry, and performing the corresponding function of fortune telling in the third-party application.

The seventh application scenario:

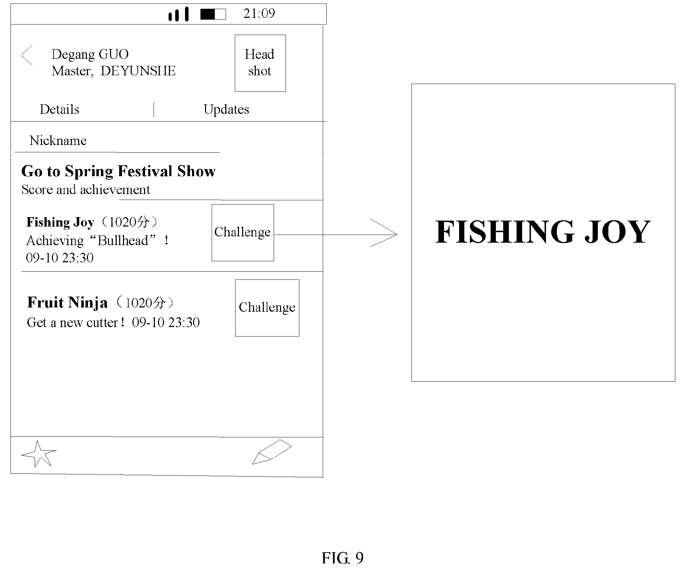

Referring to fig. 9, it illustrates a schematic diagram showing an exemplary application scenario of a plugin for game competition with a target contact according to an embodiment of the present disclosure.

The plugins of contact list comprise a plugin for game center, through which plugin the user has written account number information of the game center corresponding to a target contact into information of the target contact in the contact list, and the receiving a user request for invoking a function of the plugin and invoking the corresponding function of the plugin according to the user request comprises:
receiving a request submitted by a user for game competition with a target contact, and opening a corresponding entry of a third-party application associated with the plugin for game center according to the request of the user; and
transmitting data of the target contact and the current user to the third-party application via the entry, and performing the corresponding function of game competition in the third-party application.

The eighth application scenario:

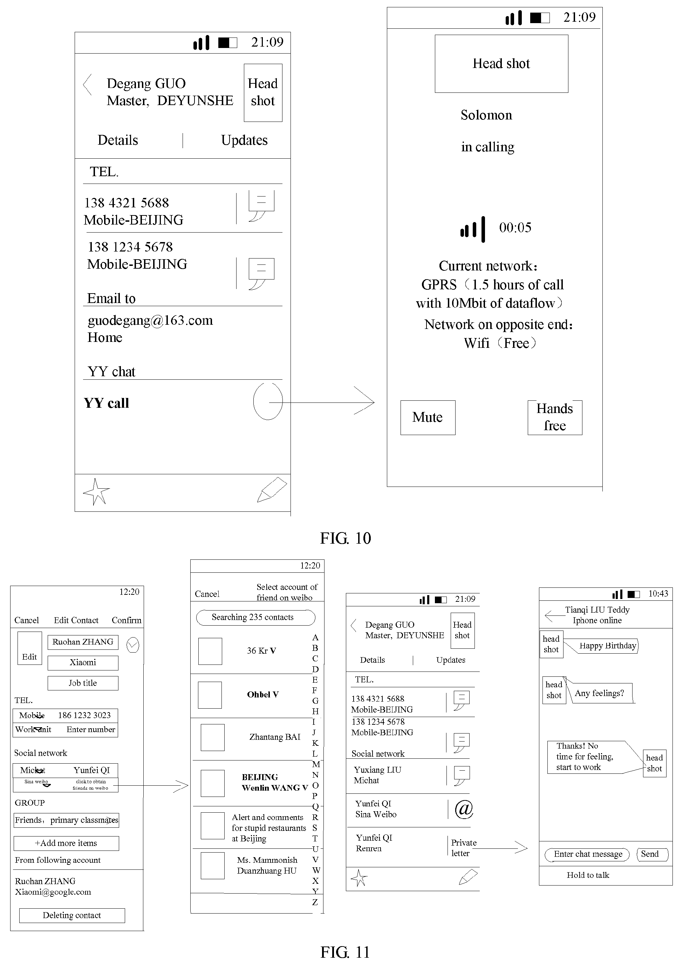

Referring to fig. 10, it illustrates a schematic diagram showing an exemplary application scenario of a plugin for online voice/video call with a target contact according to an embodiment of the present disclosure.

The plugins of contact list comprise a plugin for online voice/video call, through which plugin the user has written account number information of the online voice/video call service corresponding to a target contact into information of the target contact in the contact list, and may judge whether the opposite end is on line according to an online status of a terminal device. The receiving a user request for invoking a function of the plugin and invoking the corresponding function of the plugin according to the user request comprises:
receiving a request submitted by a user for online voice/video call with a target contact, and opening a corresponding entry of a third-party application associated with the plugin for online call according to the request of the user; and
transmitting data of the target contact and the current user to the third-party application via the entry, and performing the corresponding function of online voice/video call in the third-party application.

The ninth application scenario:

Referring to fig. 11, it illustrates a schematic diagram showing an exemplary application scenario of a plugin for instant chat with a target contact according to an embodiment of the present disclosure.

The plugins of contact list comprise a plugin for instant chat, through which plugin the user has written account number information of an instant chat service corresponding to a target contact into information of the target contact in the contact list, and may judge whether the opposite end is on line according to an online status of a terminal device. The receiving a user request for invoking a function of the plugin and invoking the corresponding function of the plugin according to the user request comprises:
receiving a request submitted by a user for instant chat with a target contact, and opening a corresponding entry of a third-party application associated with the plugin for instant chat according to the request of the user; and
transmitting data of the target contact and the current user to the third-party application via the entry, and performing the corresponding function of instant chat in the third-party application.

The tenth application scenario:

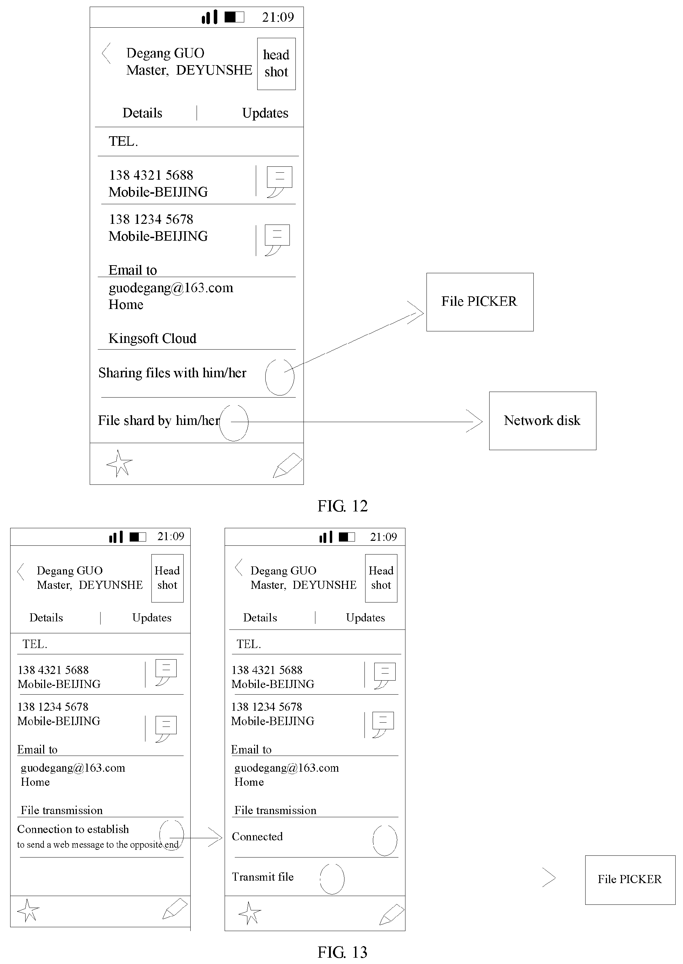

Referring to fig. 12, it illustrates a schematic diagram showing an exemplary application scenario of a plugin for sharing files with a target contact according to an embodiment of the present disclosure.

The plugins of contact list comprise a plugin for network disk sharing, through which plugin a user has written account number information of a network storage service corresponding to a target contact into information of the target contact in the contact list, and the receiving a user request for invoking a function of the plugin and invoking the corresponding function of the plugin according to the user request comprises:
receiving a request submitted by a user for sharing files with the target contact, and opening a corresponding entry of a third-party application associated with the plugin for network storage sharing according to the request of the user; and
transmitting data of the target contact and the current user to the third-party application via the entry, and performing the corresponding function of sharing files in the third-party application.

The eleventh application scenario:

Referring to fig. 13, it illustrates a schematic diagram showing an exemplary application scenario of a plugin for interconnection with a target contact according to an embodiment of the present disclosure.

The plugins of contact list comprise a plugin for dual-interconnection, through which plugin a user has written account number information of an interconnection service corresponding to a target contact into information of the target contact in the contact list, and the receiving a user request for invoking a function of the plugin and invoking the corresponding function of the plugin according to the user request comprises:
receiving a request submitted by a user for interconnecting with the target contact, and opening a corresponding entry of a third-party application associated with the plugin for dual-interconnection according to the request of the user; and
transmitting data of the target contact and the current user to the third-party application via the entry, and performing the corresponding function of interconnection in the third-party application.

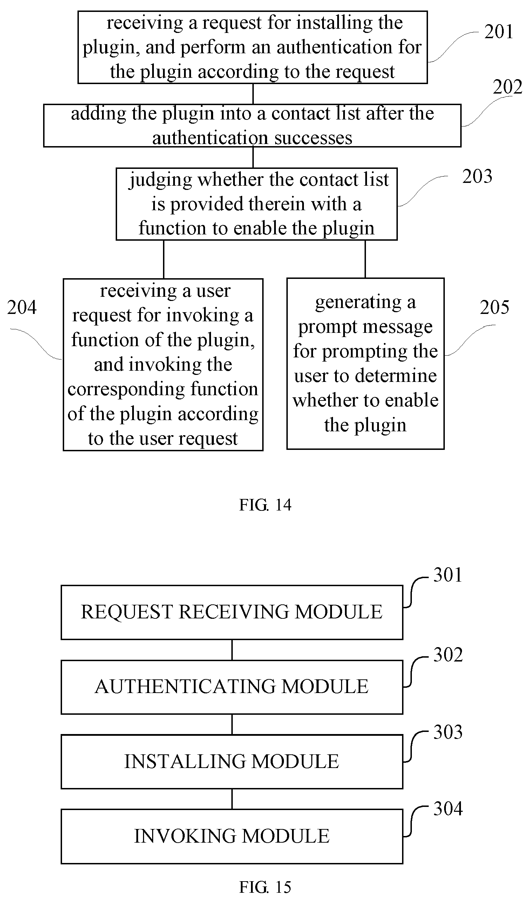

Referring to fig. 14, it illustrates an exemplary flow chart of a method for adding a plugin into a contact list according to a second embodiment of the present disclosure, which may specifically comprise following :
step 201, receiving a request for installing a plugin, and perform an authentication for the plugin according to the request;
step 202, adding the plugin into the contact list after the authentication successes;
step 203, judging whether the contact list is provided therein with a function to enable the plugin; if so, performing step 204; and if not, performing step 205;
step 204, receiving a user request for invoking a function of the plugin, and invoking a corresponding function of the plugin according to the user request; and
step 205, generating a prompt message for prompting the user to determine whether to enable the plugin.

In implementations of the present embodiment, it is detected whether the contact list is provided therein with the function to enable the plugin before receiving a user request for invoking a function of the plugin. Depending on different design concepts of plugins, a plugin may be enabled or disabled by default after its installation, or a user may re-enable a plugin as desired after disabling the same. The plugin may also be disabled due to other situations. By adopting this solution, it may be detected in advance whether the contact list is provided therein with the function to enable the plugin, then a user may choose by oneself to enable it when in needs and disable it when not in needs, thus saving resources and improving user experiences.

As to the embodiments of the methods, they are illustrated as a series of action combinations for purpose of brief description. However, it should be known for those skilled in the art that, the embodiments of the present disclosure are not limited to orders of those actions, since some of the steps may be performed in other orders or simultaneously according to the embodiments of the present disclosure. Moreover, it should also be known for those skilled in the art that, those embodiments described herein are only for exemplary, while the related actions may not be necessary in the embodiments of the present disclosure.

Referring to fig. 15, it illustrates an exemplary block diagram of an apparatus for adding a plugin into the contact list, wherein the plugin refer to a plugin of a third-party application which is generated based on a specification defined by the interface, the apparatus comprises following modules:
a request receiving module 301 configured to receive a request for installing the plugin,
an authenticating module 302 configured to perform an authentication for the plugin according to the request;
an adding module 303 configured to add the plugin into the contact list after the authentication successes; and
an invoking module 304 configured to receive a user request for invoking a function of the plugin, and invoke the corresponding function of the plugin according to the user request.

In implementations, the contact list may comprise contact information of account numbers bound by the user.

In an embodiment of the present disclosure, the specification defined by the interface may comprise specifically a User Interface (UI) specification and a predefined authority specification.

In the embodiment of the present disclosure, the authenticating module may comprise specifically:
a judging submodule configured to judge according to the request whether the plugin conforms to the User Interface (UI) specification and the predefined authority specification, and if the plugin conforms to the User Interface (UI) specification and the predefined authority specification, call a successful authenticating submodule, if the plugin does not conform to the User Interface (UI) specification or the predefined authority specification, call a first prompting submodule; wherein
the successful authenticating submodule is configured to determine that the authentication successes; and
the first prompting submodule is configured to generate a prompt message for prompting the user to determine whether to continue the installation.

In an embodiment of the present disclosure, the adding module may comprise specifically:
a presenting submodule configured to present the plugin at a corresponding position of the contact list in a designated mode according to the specification defined by the interface; and
an installing submodule configured to install a functional data packet carried in the plugin.

In an embodiment of the present disclosure, the invoking module may comprise specifically:
an entry opening submodule configured to receive a request for invoking the function of the plugin from a user, open the functional data packet carried in the plugin, and open a corresponding entry accessing an associated third-party application through the functional data packet; and
a data transmitting submodule configured to transmit data from the contact list to the third-party application via the entry, and perform the corresponding function in the third-party application.

In an embodiment of the present disclosure, the apparatus may further comprise:
a judging module configured to judge whether the contact list is provided therein with a function to enable the plugin, and if the contact list is provided therein with a function to enable the plugin, call an execution submodule, if the contact list is not provided therein with a function to enable the plugin, call a second prompting submodule; wherein
the execution submodule is configured to perform the receiving the user request for invoking the function of the plugin; and
the second prompting submodule is configured to generate a prompt message for prompting the user to determine whether to enable the plugin.

The embodiments of the apparatus is described relative simply, since the it is substantially similar to those embodiments of the methods for adding a plugin into the contact list, and some correlated parts may be apparent with reference to those parts in the description of the methods for adding a plugin in a contact list.

The embodiments of the present disclosure further provide a device, wherein the device may comprise:
one or more processors;
a memory; and
one or more modules, stored in the memory and configured to be executed by the one or more processors, wherein the one or more modules are provided with following functions:
receiving a request for installing the plugin, and performing an authentication for the plugin according to the request;
adding the plugin into the contact list after the authentication successes; and
receiving a user request for invoking a function of the plugin, and invoking a corresponding function of the plugin according to the user request.

Preferably, the specification defined by the interface may comprise a User Interface (UI) specification and a predefined authority specification.

Preferably, the one or more modules may be provided with following functions:
receiving the request for installing the plugin, and judging according to the request whether the plugin conforms to the User Interface (UI) specification and the predefined authority specification; wherein
if the plugin conforms to the User Interface (UI) specification and the predefined authority specification, then determining that the authentication successes, and
if the plugin does not conform to the User Interface (UI) specification or the predefined authority specification, then generating a prompt message for prompting the user to determine whether to continue the installation.

Preferably, the one or more modules may be provided with following functions:
presenting the plugin at a corresponding position of the contact list in a designated mode according to the specification defined by the interface; and
installing a functional data packet carried in the plugin.

Preferably, the one or more modules may be provided with following functions:
judging whether the contact list is provided therein with a function to enable the plugin; wherein
if the contact list is provided therein with a function to enable the plugin, then performing the receiving a user request for invoking the function of the plugin; and
if the contact list is not provided therein with a function to enable the plugin, then generating a prompt message for prompting the user to determine whether to enable the plugin.

Preferably, the one or more modules may be provided with following functions:
receiving a request for invoking the function of the plugin from a user, opening the functional data packet carried in the plugin, and opening a corresponding entry accessing an associated third-party application through the functional data packet; and
transmitting data from the contact list to the third-party application via the entry, and performing the corresponding function in the third-party application.

Preferably, the contact list may comprise therein contact information of account numbers bound by the user.

The present embodiment further provides a non-volatile readable storage medium with one or more programs stored therein, the one or more programs, when being applied to a device having a contact list, may enable the device to execute instructions of following steps:
receiving a request for installing the plugin, and performing an authentication for the plugin according to the request;
adding the plugin into the contact list after the authentication successes; and
receiving a user request for invoking a function of the plugin, and invoking a corresponding function of the plugin according to the user request.

Preferably, the specification defined by the interfaces may comprise a User Interface (UI) specification and a predefined authority specification.

Preferably, the one or more modules may be provided with following functions:
receiving the request for installing the plugin, and judging according to the request whether the plugin conforms to the User Interface (UI) specification and the predefined authority specification; wherein
if the plugin conforms to the User Interface (UI) specification and the predefined authority specification, then determining that the authentication successes, and
if the plugin does not conform to the User Interface (UI) specification or the predefined authority specification, then generating a prompt message for prompting the user to determine whether to continue the installation.

Preferably, the one or more modules may be provided with following functions:
presenting the plugin at a corresponding position of the contact list in a designated mode according to the specification defined by the interface; and
installing a functional data packet carried in the plugin.

Preferably, the one or more modules may be provided with following functions:
judging whether the contact list is provided therein with a function to enable the plugin; wherein
if the contact list is provided therein with a function to enable the plugin, then receiving a user request for invoking the function of the plugin, and invoking a corresponding function of the plugin according to the user request; wherein
if the contact list is not provided therein with a function to enable the plugin, then generating a prompt message for prompting the user to determine whether to enable the plugin.

Preferably, the one or more modules may be provided with following functions:
receiving a request for invoking the function of the plugin from a user, opening the functional data packet carried in the plugin, and opening a corresponding entry accessing an associated third-party application through the functional data packet; and
transmitting data from the contact list to the third-party application via the entry, and performing the corresponding function in the third-party application.

Preferably, the contact list may comprise therein contact information of account numbers bound by the user.

The embodiments of the device is described relative simply, since it is substantially similar to those embodiments of the methods for adding a plugin into the contact list, and some correlated parts may be apparent with reference to those parts in the description of the methods for adding a plugin into the contact list.

Respective embodiments of the present descriptions are described in a progressive manner, in which each embodiment is described by focusing on those differences with the other embodiments, while those like parts among the embodiments may be referred with each other.

It should be understood for those skilled in the art that, the embodiments of the present disclosure may be provided as methods, systems, or computer program products. In this way, the present disclosure may be in the form of hardware-only embodiments, software-only embodiments, or embodiments in combination of software and hardware. Moreover, the present disclosure may be in the form of computer program products to be carried on one or more computer usable storage media (comprising but not limited to disc memories, CD-ROMs, optical memories and the like) including computer usable program codes therein.

The present disclosure is described with reference to the flow charts and/or block diagrams of the method, the terminal device (system), and the computer program products according to the embodiments of the present disclosure. It should be understood that the computer program instructions may be used to implement each flow process and/or each block process in the flow charts and/or block diagrams, and the combinations of the flow process and/or block process in the flow charts and/or block diagrams. The computer program instructions may be provided to a general computer, a dedicated computer, an embedded processor or processors of other programmable data process devices to produce a machine, so that the instructions executed by the computers or the processors of other programmable data process devices can produce a device for achieving the functions prescribed by one or more procedures in the flow charts and/or one or more blocks in the block diagrams.

Those computer program instructions may also be stored in a computer readable memory able to guide the computer or other programmable data process devices to work in a specific way, so that the instructions stored in the computer readable memory may produce a manufactured product including an instructing device for achieving the functions prescribed by one or more procedures in the flow charts and/or one or more blocks in the block diagrams.

Those computer program instructions may also be loaded in a computer or other programmable data process devices, such that the computer or other programmable devices may execute a series of operation steps to produce processes achieved by the computer, thereby the instructions executed on the computers or other programmable devices can produce steps for achieving the functions prescribed by one or more procedures in the flow charts and/or one or more blocks in the block diagrams.

The embodiments of the present disclosure have been described in detail, but those skilled in the art can make other variations and modifications to those embodiments upon the acknowledgements of the basic inventiveness concepts. In this way, the appended claims herein are intended to be interpreted as cover the embodiments and all variations and modifications within the scope of the present disclosure.

Finally, it should be further noted that, those terms indicating relation such as "first" and "second" herein are only used to distinguish an entity or operation from another entity or operation, rather than requiring or implying any actual relation or order existed between these entities or operations. Moreover, the terms such as "comprise", "include" or any other varieties intend to cover a non-exclusive inclusion, such that a process, a method, a product, or a terminal device comprising not only those elements but also other elements being not explicitly enumerated, or even those elements being inherently contained in the process, the method, the product, or the terminal device. An element defined by a sentence like "comprising one/a..." may not exclude an existence of other similar elements in the process, the method, the product, or the terminal device comprising the elements, unless otherwise further limited.

A method for adding a plugin into a contact list, an apparatus and a device for adding a plugin into the contact list provided in the embodiments of the present disclosure are introduced in detail as above. Some specific cases are used to illustrate the principle and implementation modes of the embodiments according to the present disclosure, and description of the embodiments as above is only for purpose of facilitating the understanding of the methods and core concepts thereof. In addition, for those skilled in the art, modifications will be made in the specific implementation modes and the application range according to the concepts of the embodiments of the present disclosure. To sum up, the disclosure of the present descriptions should not be interpreted as limitation to the embodiments of the present disclosure.

## Claims

1. A method for adding a plugin into a contact list, **characterized in that** the contact list has an open interface, and the plugin is a third-party application plugin generated based on a specification defined by the interface; the method comprises:
receiving a request for installing the plugin, and performing an authentication for the plugin according to the request;
adding the plugin into the contact list after the authentication successes; and
receiving a user request for invoking a function of the plugin, and invoking a corresponding function of the plugin according to the user request.

2. The method according to claim 1, **characterized in that** the specification defined by the interface comprises a User Interface UI specification and a predefined authority specification.

3. The method according to claim 2, **characterized in that** the receiving the request for installing the plugin and performing the authentication for the plugin according to the request comprises:
receiving the request for installing the plugin, and judging according to the request whether the plugin conforms to the User Interface UI specification and the predefined authority specification;
if the plugin conforms to the User Interface UI specification and the predefined authority specification, then determining that the authentication successes, and
if the plugin does not conform to the User Interface UI specification or the predefined authority specification, then generating a prompt message for prompting the user to determine whether to continue the installation.

4. The method according to claim 1 or 2 or 3, **characterized in that** the adding the plugin into the contact list comprises:
presenting the plugin at a corresponding position of the contact list in a designated mode according to the specification defined by the interface; and
installing a functional data packet carried in the plugin.

5. The method according to claim 1 or 2 or 3, **characterized in that** prior to the receiving the user request for invoking the function of the plugin, the method further comprises:
judging whether the contact list is provided therein with a function to enable the plugin;
if the contact list is provided therein with a function to enable the plugin, then performing the receiving the user request for invoking the function of the plugin; and
if the contact list is not provided therein with a function to enable the plugin, then generating a prompt message for prompting the user to determine whether to enable the plugin.

6. The method according to claim 4, **characterized in that** the the receiving the user request for invoking the function of the plugin and invoking the corresponding function of the plugin according to the user request comprises:
receiving the user request for invoking the function of the plugin, opening the functional data packet carried in the plugin, and opening a corresponding entry accessing an associated third-party application through the functional data packet; and
transmitting data from the contact list to the third-party application via the entry, and performing the corresponding function in the third-party application.

7. The method according to claim 1 or 2 or 3 or 6, **characterized in that** the contact list comprises therein contact information of account numbers bound by the user.

8. An apparatus for adding a plugin into the contact list, **characterized in that** the contact list has an open interface, and the plugin is a third-party application plugin generated based on a specification defined by the interface; the apparatus comprises:
a request receiving module configured to receive a request for installing the plugin;
an authenticating module configured to perform an authentication for the plugin according to the request;
an adding module configured to add the plugin into the contact list after the authentication successes; and
an invoking module configured to receive a user request for invoking a function of the plugin, and invoke the corresponding function of the plugin according to the user request.

9. The apparatus according to claim 8, **characterized in that** the specification defined by the interface comprises a User Interface UI specification and a predefined authority specification.

10. The apparatus according to claim 9, **characterized in that** the authenticating module comprises:
an authority specification judging submodule configured to judge according to the request whether the plugin conforms to the User Interface UI specification and the predefined authority specification, and
if the plugin conforms to the User Interface UI specification and the predefined authority specification, call a successful authenticating submodule, if the plugin does not conform to the User Interface UI specification or the predefined authority specification, call a first prompting submodule; wherein
the successful authenticating submodule is configured to determine that the authentication successes; and
the first prompting submodule is configured to generate a prompt message for prompting the user to determine whether to continue the installation.

11. The apparatus according to claim 8 or 9 or 10, **characterized in that** the adding module comprises:
a presenting submodule configured to present the plugin at a corresponding position of the contact list in a designated mode according to the specification defined by the interface; and
an installing submodule configured to install a functional data packet carried in the plugin.

12. The apparatus according to claim 8 or 9 or 10, **characterized in that** the apparatus further comprises:
an enablement judging module configured to judge whether the contact list is provided therein with a function to enable the plugin, and if the contact list is provided therein with the function to enable the plugin, call an execution submodule, if the contact list is not provided therein with the function to enable the plugin, call a second prompting submodule; wherein
the execution submodule is configured to perform the receiving the user request for invoking the function of the plugin; and
the second prompting submodule is configured to generate a prompt message for prompting the user to determine whether to enable the plugin.

13. The apparatus according to claim 11, **characterized in that** the invoking module comprises:
an entry opening submodule configured to receive a user request for invoking the function of the plugin, open the functional data packet carried in the plugin, and open a corresponding entry accessing an associated third-party application through the functional data packet; and
a data transmitting submodule configured to transmit data from the contact list to the third-party application via the entry, and perform the corresponding function in the third-party application.

14. A device, **characterized in that** the device comprises:
one or more processors;
a memory; and
one or more modules stored in the memory and configured to be executed by the one or more processors, wherein the one or more modules are provided with following functions:
receiving a request for installing a plugin, and performing an authentication for the plugin according to the request;
adding the plugin into the contact list after the authentication successes; and
receiving a user request for invoking a function of the plugin, and invoking a corresponding function of the plugin according to the user request.
